(19) Europäisches Patentamt
European Patent Office
Office européen des brevets

(11) Publication number: **0 077 106**
**B1**

(12) # EUROPEAN PATENT SPECIFICATION

(45) Date of publication of patent specification: **15.01.86**

(51) Int. Cl.$^4$: **C 08 G 69/28**

(21) Application number: **82201262.1**

(22) Date of filing: **12.10.82**

(54) **Process for making polytetramethyleneadipamide.**

(30) Priority: **13.10.81 NL 8104639**

(43) Date of publication of application: **20.04.83 Bulletin 83/16**

(45) Publication of the grant of the patent: **15.01.86 Bulletin 86/03**

(84) Designated Contracting States: **BE CH DE FR GB IT LI NL SE**

(56) References cited:

**JOURNAL OF POLYMER SCIENCE, Polymer Chemistry Edition, vol. 15, no. 1, January 1977, pages 537-545; R.J. GAYMANS et al.: "Preparation and some properties of nylon 46"**

(73) Proprietor: **STAMICARBON B.V.**
**Postbus 10**
**NL-6160 MC Geleen (NL)**

(72) Inventor: **Bour, Edmond Hendrik Joseph Piet**
**Vriendenkringstraat 34**
**NL-6141 LJ Limbricht (NL)**
Inventor: **Warnier, Jean Marie Martinus**
**Maalsteenstraat 4**
**NL-6129 JH Urmond (NL)**

(74) Representative: **Leherte, Georges Maurice Lucien Marie et al**
**Octrooibureau DSM P.O.Box 9**
**NL-6160 MA Geleen (NL)**

**EP 0 077 106 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

The invention relates to a process for making polytetramethyleneadipamide (nylon-4,6) by making a polymer based on adipic acid and 1,4-diamino-butane and converting it by further condensation if necessary into a high-molecular polyamide. It is known in the art to make a prepolymer by heating the salt of adipic acid and 1,4-diaminobutane at elevated pressure and to allow it to condense further in solid form. The disadvantage of that process is that an autoclave will be required. It is also known in the art to react diaminobutane and adipic acid chloride in a boundary surface polymerization process. The disadvantage of applying that process is the formation of hydrochloric acid.

The object of the invention is to make a polytetramethyleneadipamide polymer in a simple manner.

According to the invention polytetramethyleneadipamide is made by heating adipic acid and 1,4-diaminobutane, as such or in the form of a salt, at a temperature of between 150 and 300°C in an inert polar organic solvent in which the polymer to be formed is soluble at a temperature above 150°C.

The advantage of this process is that it can be performed in a simple manner, even at atmospheric or only slightly elevated pressure. If the process is used for making a prepolymer, it will be found that the prepolymer lends itself well for after-condensation to a high-molecular white polytetramethyleneadipamide.

The solvent must be inert in respect to the reactants and the polymer formed. Furthermore, its polarity must be such that the solubility, in the solvent, of the prepolymer formed must be good at a temperature higher than 150°C. The boiling point of the solvent at atmospheric pressure is preferably above 150°C and more particularly above 200°C.

A solvent having a boiling point between 150°C and 200°C can be used, though the process will then generally have to be performed under pressure. Examples of suitable solvents are particularly 2-pyrrolidone and N-methyl-2-pyrrolidone.

The advantage of the use of solvents such as 2-pyrrolidone is that the solubility of the prepolymer therein at temperatures below 50°C is very low, which makes it possible to precipitate the prepolymer by cooling and to recover it by filtration or centrifugation. The concentration of the polyamide-forming compounds in the solvent depends in part on the solubility of the prepolymer or polymer to be formed. Generally between 10 and 300 parts by weight of polyamide-forming compounds will be used per 100 parts by weight of solvent. Preference is given to applying between 30 and 150 parts by weight of polyamide-forming compounds per 100 parts of solvent.

It is possible to start from 1,4-diaminobutane and adipic acid, so that the salt formation step customary in the preparation of polyamides is avoided. If so desired, the salt may also be started from, however. The molar ratio between 1,4-diaminobutane and adipic acid is 1:1 or higher. If the aftercondensation applied is such that it may involve the loss of diaminobutane, it is to be recommended to use a certain excess of diaminobutane, for instance between 0.5 and 15 moles % in respect of the quantity equivalent to the adipic acid, and preferably to use an excess of between 1.5 and 5 moles %. In addition to the 1,4-diaminobutane and the adipic acid, other polyamide-forming compounds may optionally be present, such as aliphatic, cycloaliphatic or aromatic dicarboxylic acids and/or diamines or copolymerizable lactams. Examples of these compounds are succinic acid, sebacic acid, isophthalic acid, terephthalic acid, hexamethylenediamine, diaminomethylbenzene, caprolactam, laurolactam, ε-aminocaproic acid and 11-aminoundecacarboxylic acid. Such compounds are used in at most subordinate quantities of not more than 25% by wt. calculated in respect of the 1,4-diaminobutane and adipic acid. Preference is given to preparing the homopolymer. Optionally, in the polymerization or prepolymerization process a catalyst may further be present, such as phosphoric acid or another acid, and agents to regulate the molecular weight may also be present, such as acetic acid or benzoic acid.

The process according to the invention can be applied for the preparation of a prepolymer, i.e. a polymer having a relatively low molecular weight, corresponding with a relative viscosity ($\eta_{rel}$ measured at 20°C of a solution of 1.0 g polymer in 100 ml 96% sulphuric acid) of between 1.05 and 2.25, in most cases between 1.10 and 2.25. To this end a relatively low temperature and/or relatively low residence time of the reactants is applied. The prepolymer thus obtained can be separated off and be converted, by further condensation in the solid phase, preferably in a water vapour-containing atmosphere and a temperature of between 250°C and the melting point of the polymer, into a high-molecular polyamide having a relative viscosity of between 2.5 and 7.5. The advantage of that process is that the prepolymer can be prepared at atmospheric pressure.

By applying a higher temperature and/or longer residence time a high-molecular polyamide, having a relative viscosity above 2.25, for instance between 2.5 and 3.5, can also be obtained. In order to reach a very high molecular weight, corresponding with a relative viscosity higher than 3.5, the best thing is to apply after-condensation in the solid phase.

The process is preferably performed at about atmospheric pressure. If required a higher pressure may be applied, for instance between 1 and 5 bar, if such pressure is necessary to keep the solvent in a liquid form. It is to be recommended in any case during the first phase of the polymerization to drain off the liberated

water, if necessary by applying a pressure lower than 1 bar for some time.

The process is performed at a temperature of between 150°C and 300°C, and preferably between 175°C and 300°C. If only a prepolymer is to be prepared, a temperature of between 175°C and 225°C is very suitable. For the preparation of a polyamide having a higher molecular weight, preference is given to applying a temperature of between 225°C and 290°C. In the lastmentioned case the temperature during the polymerization can also be increased gradually.

The polymer formed can be separated off by evaporating off the solvent or by adding such a quantity of a non-solvent that the polymer precipitates. Preference, however, is given to using a solvent in which the polymer is not or poorly soluble at a temperature lower than 50°C, so that in cooling the solution to, for instance, a temperature of 20°C to 30°C the polymer precipitates and can be recovered by filtration or centrifugation. 2-Pyrrolidone and N-methyl-2-pyrrolidone are examples of such solvents.

The process according to the invention makes it possible in a relatively short time (in the order of a few hours) to prepare polymers having high molecular weights.

The invention will be elucidated by means of the following examples without being restricted to the embodiments described therein.

Example I

The polymerization was performed in a reactor provided with a stirrer, heating jacket and reflux condenser. At a temperature of 120°C 31.7 g adipic acid was dissolved in 100 g 2-pyrrolidone. Subsequently, during stirring, 19.1 g 1,4-diaminobutane was added, at which a precipitate of the adipic acid salt was formed. During heating to 165°C this salt dissolved again. The solution was kept at 185°C for six hours and subsequently coagulated in water at room temperature. The precipitate formed in this process was filtered off, washed with hot water and dried. Thus 37 g white powdery polytetramethylenedipamide having a relative viscosity of 1.3 (measured at 20°C of a solution of 1.0 gramme polymer in 100 ml 96% sulphuric acid) was obtained.

By after-condensation for 8 hours at 260°C in an atmosphere of nitrogen and water vapour (volume ratio 3:1) a white polyamide was obtained having a relative viscosity of 5.57.

Example II

In a manner further known in the art the salt of 1,4-diaminobutane was prepared with adipic acid. 175 g of the salt was dissolved, during stirring, in 400 g 2-pyrrolidone at 180°C. The solution was subsequently heated for 6 hours at 210°C with some relfux of the solvent. The polyamide was then recovered by cooling and worked up in the manner described in example I.

The white powdery polyamide 151 g had a relative viscosity of 1.55.

**Claims**

1. Process for the preparation of a polymer, substantially consisting of

$$[NH—(CH_2)_4—NH—CO—(CH_2)_4—CO]$$

units, starting from adipic acid, 1,4-diaminobutane and, if so desired, up to 25% by wt., calculated in respect of these compounds, of one or more other compounds forming polyamides under the reaction conditions, characterized in that the starting compounds are heated, as such or in the form of a salt, in an inert polar organic solvent in which the polymer to be formed can be dissolved at a temperature higher than 150°C, at a temperature of between 150°C and 300°C until a polymer is formed, and the polymer is subsequently recovered from the solution.

2. Process according to claim 1, characterized in that the polymerization is performed at a temperature of between 175°C and 300°C.

3. Process according to claims 1—2, characterised in that a solvent is used having a boiling point, at atmospheric pressure, of at least 150°C.

4. Process according to claims 1—3, characterized in that a solvent is used having a boiling point, at atmospheric pressure, of at least 200°C.

5. Process according to claims 1—4, characterized in that a solvent is used in which the polymer to be formed is not or poorly soluble at a temperature lower than 50°C.

6. Process according to claims 1—4, characterized in that the solvent used is 2-pyrrolidone or N-methyl-2-pyrrolidone.

7. Process according to claims 1—6, characterized in that a polymer having a relative viscosity of between 1.10 and 2.25 is prepared and further condensed, after separation from the solution, to form a polyamide having a higher molecular content.

8. Process according to claims 1—7, characterized in that between 30 and 150 parts by weight of polyamide-forming components are used per 100 parts by weight of solvent.

**Patentansprüche**

1. Verfahren zur Herstellung eines im wesentlichen aus

$$[NH—(CH_2)_4—NH—CO—(CH_2)_4—CO]$$

Einheiten bestehenden Polymers, ausgehend von Adipinsäure, 1,4-Diaminobutan und, wenn gewünscht, bis zu 25 Gew.-%, berechnet bezüglich dieser Verbindungen, einer oder mehrerer Verbindungen, welche unter den Reaktionsbedingungen Polyamide bilden, dadurch gekennzeichnet, daß die Ausgangsverbindungen, als solche oder in Form eines Salzes, in einem inerten polaren Lösungsmittel, in welchem das zu bildende Polymer bei einer Temperatur von über 150°C gelöst werden kann, auf eine Temperatur zwischen 150 und 300°C erhitzt werden, bis ein

Polymer gebildet ist, und das Polymer anschließend aus der Lösung gewonnen wird.

2. Verfahren nach Anspruch 1, dadurch gekennzeichnet, daß die Polymerisation bei einer Temperatur zwischen 175 und 300°C durchgeführt wird.

3. Verfahren nach den Ansprüchen 1—2, dadurch gekennzeichnet, daß ein Lösungsmittel verwendet wird, das einen Siedepunkt, bei Atmosphärendruck, von mindestens 150°C hat.

4. Verfahren nach den Ansprüchen 1—3, dadurch gekennzeichnet, daß ein Lösungsmittel verwendet wird, das einen Siedepunkt, bei Atmosphärendruck von mindestens 200°C hat.

5. Verfahren nach den Ansprüchen 1—4, dadurch gekennzeichnet, daß ein Lösungsmittel verwendet wird, in welchem das zu bildende Polymer nicht oder wenig löslich bei einer Temperatur unter 50°C ist.

6. Verfahren nach den Ansprüchen 1—4, dadurch gekennzeichnet, daß das verwendete Lösungsmittel 2-Pyrrolidon oder N-Methyl-2-pyrrolidon ist.

7. Verfahren nach den Ansprüchen 1—6, dadurch gekennzeichnet, daß ein Polymer mit einer relativen Viskosität zwischen 1,10 und 2,25 hergestellt und, nach Abtrennung aus der Lösung, weiter kondensiert wird, um ein Polyamid mit einem höheren Molekulargewicht zu bilden.

8. Verfahren nach den Ansprüchen 1—7, dadurch gekennzeichnet, daß zwischen 30 und 150 Gew.-Teile polyamidbildende Komponenten je 100 Gew.-Teilen Lösungsmittel verwendet werden.

**Revendications**

1. Procédé pour la préparation d'un polymère constitué essentiellement de motifs

$$[NH—(CH_2)_4—NH—CO—(CH_2)_4—CO]$$

à partir d'acide adipique, de 1,4-diaminobutane et, si on le désire, de jusqu'à 25% en poids, calculé par rapport à ces composés, d'un ou plusieurs autres composés formant des polyamides dans les conditions réactionnelles, caractérisé en ce que les composés de départ sont chauffés, tels quels ou sous forme d'un sel, dans un solvant organique polaire inerte, dans lequel le polymère à former peut être dissous à une température supérieure à 150°C à une température comprise entre 150°C et 300°C, jusqu'à formation d'un polymère, puis le polymère et récupéré de la solution.

2. Procédé selon la revendication 1, caractérisé en ce que la polymérisation est effectuée à une température entre 175°C et 300°C.

3. Procédé selon les revendications 1—2, caractérisé en ce qu'on utilise un solvant ayant un point d'ébullition à la pression atmosphérique, d'au moins 150°C.

4. Procédé selon les revendications 1—3, caractérisé en ce qu'on utilise un solvant ayant un point d'ébullition, à la pression atmosphérique, d'au moins 200°C.

5. Procédé selon les revendications 1—4, caractérisé en ce qu'on utilise un solvant dans lequel le polymère à former n'est par soluble ou n'est que peu soluble, à une température inférieure à 50°C.

6. Procédé selon les revendications 1—4, caractérisé en ce que le solvant utilisé est la 2-pyrrolidone ou la N-méthyl-2-pyrrolidone.

7. Procédé selon les revendications 1—6, caractérisé en ce que l'on prépare un polymère ayant une viscosité relative entre 1,10 et 2,25 et en ce qu'on le soumet à une condensation ultérieure, après séparation d'avec la solution, pour former un polyamide ayant un poids moléculaire plus élevé.

8. Procédé selon les revendications 1—7, caractérisé en ce que l'on utilise entre 30 et 150 parties en poids de composants formant un polyamide, pour 100 parties en poids de solvant.